**Europäisches Patentamt**

**European Patent Office**

**Office européen des brevets**

(19)

(11) Veröffentlichungsnummer: **0 225 542 B1**

## EUROPÄISCHE PATENTSCHRIFT

(12)

(45) Veröffentlichungstag der Patentschrift: **08.05.91**

(51) Int. Cl.⁵: **G03B 25/02**, G03B 27/28, G02B 27/02, G09F 13/10

(21) Anmeldenummer: **86116383.0**

(22) Anmeldetag: **25.11.86**

(54) Leuchtkasten für Diapositive.

(30) Priorität: **05.12.85 DE 3543014**

(43) Veröffentlichungstag der Anmeldung:
**16.06.87 Patentblatt 87/25**

(45) Bekanntmachung des Hinweises auf die
Patenterteilung:
**08.05.91 Patentblatt 91/19**

(84) Benannte Vertragsstaaten:
**AT BE CH DE ES FR GB IT LI NL SE**

(56) Entgegenhaltungen:
**DE-C- 524 150**   **DE-C- 842 004**
**GB-A- 592 270**   **US-A- 2 321 249**
**US-A- 2 596 677**   **US-A- 4 415 648**

(73) Patentinhaber: **Hinrichs Fotowerbung GmbH
Raiffeisenstrasse 21
W-4504 Georgsmarienhütte(DE)**

(72) Erfinder: **Hinrichs, Peter
Fliederkamp 10
W-4500 Osnabrück(DE)**

(74) Vertreter: **Busse & Busse Patentanwälte
Postfach 1226 Grosshandelsring 6
W-4500 Osnabrück(DE)**

# Beschreibung

Die Erfindung bezieht sich auf einen Leuchtkasten für Diapositive oder dgl. Transparentvorlagen gemäß dem Oberbegriff des Anspruchs 1.

Leuchtkästen dieser Art, die hauptsächlich als Werbe- und Informationsmittel Anwendung finden, haben im allgemeinen eine beleuchtete Bildfläche, die wesentlich größer ist als die strahlende Oberfläche der Lichtquelle. Daher besteht die mit abnehmender Tiefe der Leuchtkästen zunehmende Gefahr ungleichmäßiger Ausleuchtung der Bildfläche. Um eine möglichst gleichmäßige Ausleuchtung der Bildfläche zu sichern, ist man mit zunehmender Abnahme der Tiefe der Leuchtkästen dazu übergegangen, als Lichtquelle eine Mehrzahl von möglichst dicht nebeneinander angeordneten Leuchtstoffröhren vorzusehen und/oder den Leuchtstoffröhren Reflektoren zuzuordnen. Dieser Weg ist bau- und betriebskostenaufwendig. Er sichert eine im wesentlichen einwandfreie gleichmäßige Ausleuchtung der Bildfläche des Leuchtkastens auch nur bei Leuchtkastentiefen, welche den Durchmesser der verwendeten Leuchtstoffröhren um ein Mehrfaches übersteigen.

Der Erfindung liegt die Aufgabe zugrunde, einen Leuchtkasten zu schaffen, bei dem eine gleichmäßige Ausleuchtung der Bildfläche mit besonders einfachen Mitteln und unabhängig von der Leuchtkastentiefe sichergestellt ist.

Der Leuchtkasten nach der Erfindung löst diese Aufgabe mit dem im kennzeichnenden Teil des Anspruchs 1 angegebenen Merkmal. Hinsichtlich wesentlicher weiterer Ausgestaltungen wird auf die Ansprüche 2 bis 6 verwiesen.

Durch die erfindungsgemäße Ausleuchtungs-Korrekturmaske ist es möglich, eine an jeden Leuchtkasten bzw. -typ individuell angepaßte Beleuchtungskorrektur vorzunehmen mit der Folge, daß das Diapositiv eine vollkommen gleichmäßige Ausleuchtung im Gesamtbereich seiner Fläche erhält. Dabei wird die Möglichkeit eröffnet, Leuchtkästen herzustellen, die in einer extrem flachen Bauweise ausgeführt sind, die nicht nur optisch besonders anspricht, sondern auch den Materialaufwand herabsetzt.

Ein Ausführungsbeispiel des Gegenstands der Erfindung ist in der Zeichnung näher veranschaulicht. In der Zeichnung zeigen:

Fig. 1     eine schematische, abgebrochene Querschnittsdarstellung eines Leuchtkastens nach der Erfindung,

Fig. 2     einen Schnitt nach der Linie II-II in Fig. 1,

Fig. 3     eine Detaildarstellung einer Zone der Bildfläche des Leuchtkastens vor einer Leuchtstoffröhre und ohne Korrekturmaske, und

Fig. 4     eine Darstellung einer Korrekturmaske oder eines Abschnitts derselben zur Ausgleichskorrektur der Beleuchtung der Zone nach Fig. 3.

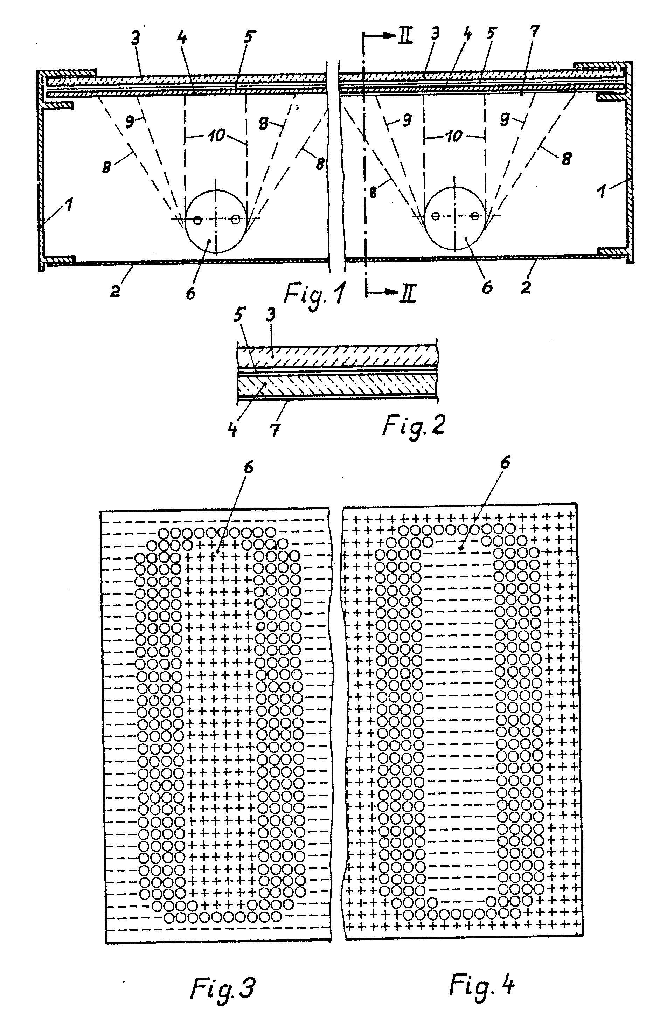

Der in Fig. 1 schematisch veranschaulichte Leuchtkasten besteht aus einem Außenrahmen 1, einer Rückwand 2, zwei vorderseitigen transparenten Trägerscheiben 3, 4, die zwischen sich ein Diapositiv 5 oder dgl. Transparentvorlage aufnehmen, sowie einer Lichtquelle in Gestalt von Leuchtstoffröhren 6, von denen je nach Größe des Leuchtkastens eine Mehrzahl im Abstand vertikal nebeneinander angeordnet sind. In dem rechten Bereich des Leuchtkastens gem. Fig. 1 ist in einer Parallelebene zum Diapositiv 5 unmittelbar hinter der inneren Trägerscheibe 4 eine Ausleuchtungs-Korrekturmaske 7 angeordnet und festgelegt, die sich in der Regel abweichend von der Darstellung über die gesamte Bildfläche des Leuchtkastens bzw. Rückseite der inneren Trägerscheibe 5 erstreckt.

Die Korrekturmaske 7 kann auch zwischen dem Diapositiv 5 und der inneren Trägerscheibe 4 Anordnung finden, jedoch ist bei Ausbildung der inneren Trägerscheibe 4 als Streuscheibe die Anordnung der Korrekturmaske im Bereich zwischen der Trägerscheibe 4 und Lichtquelle 6 bevorzugt.

Von der Lichtquelle 6 in Fig. 1 gehen jeweils tangentiale Linien 8, 9 und 10 aus, die rückseitig auf die innere Trägerscheibe (im linken Bereich in Fig. 1) bzw. auf die Korrekturmaske 7 (rechts in Fig. 1) auftreffen.

Wie der Fig. 3 entnommen werden kann, ist der Bereich der Bildfläche zwischen den Linien 10 am stärksten beleuchtet, und diese viel zu starke Beleuchtung wird durch die in Fig. 3 eingezeichneten "+"Zeichen versinnbildlicht. In den Bereichen zwischen den Linien 9 und 10 ist die Beleuchtung der Bildfläche durch die Leuchtstoffröhre 6 etwas zu stark, und diese etwas zu starke Ausleuchtung ist in Fig. 3 durch"0"Zeichen versinnbildlicht. In den Bereichen zwischen den Linien 8 und 9 ist die Ausleuchtung richtig, und in Fig. 3 ist diese richtige Ausleuchtung durch "-" Zeichen angedeutet. Eine solche ungleichförmige Ausleuchtung mit im übrigen fließenden Übergängen in der Helligkeit zwischen den einzelnen Bereichenfindet sich vor jeder Leuchtstoffröhre 6. Die Unterschiede werden um so stärker, je geringer der Abstand zwischen den Trägerscheiben und der Leuchtstoffröhre 6 bemessen wird.

Um derartige Ausleuchtungsunterschiede auszugleichen, sieht nun die Korrekturmaske 7, von der ein Abschnitt in Fig. 4 veranschaulicht ist, Bereiche unterschiedlicher Lichtdurchlässigkeit vor. In dem mittleren, zwischen den Linien 10 und 10 gelegenen Bereich vor der Leuchtstoffröhre 6 ist die Lichtdurchlässigkeit stark reduziert und in Fig.

4 wird diese starke Reduzierung durch "-"Zeichen versinnbildlicht. In dem angrenzenden, zwischen den Linien 9 und 10 gelegenen Bereich ist die Lichtdurchlässigkeit etwas reduziert, und diese mäßige Reduzierung ist in Fig. 4 durch "0"Zeichen angedeutet. In den seitlich angrenzenden Bereichen , die denen zwischen den Linien 8 und 9 entsprechen und in denen " + "Zeichen vorgesehen sind, ist die Korrekturmaske 7 in der Lichtdurchlässigkeit nicht (besonders) herabgesetzt.

Dementsprechend erbringt die Korrekturmaske 7, die im übrigen fließende Übergänge zwischen den verschiedenen Lichtdurchlässigkeitsbereichen und in diesen vorsieht, einen vollständigen Ausgleich der Ausleuchtung der Bildfläche, und zwar auch dann, wenn die Lichtquelle 6 bei angestrebter extrem flacher Bauweise des Leuchtkastens sehr dicht hinter der inneren Trägerscheibe 4 verläuft.

Gemäß einer bevorzugten Ausbildung ist die Korrekturmaske 7 von einer fotografischen Filmfolie gebildet, die in zunächst unbelichtetem Zustand in den Leuchtkasten, für den sie bestimmt ist, oder einen damit identischen Leuchtkasten eingesetzt, anschließend durch die Lichtquelle 6 des Leuchtkastens, z. B. Leuchtstoffröhren, kurzzeitig belichtet und dann entwickelt wird. Eine solche vorübergehend belichtete und anschließend entwickelte fotografische Filmfolie, bevorzugt ein empfindlicher Halbtonfilm, hat in den durch die Lichtquelle 6 belichteten Bereichen helle bis mittlere Grautöne, da dort, wo ein stärkerer Lichtauffall stattfand, die Schwärzungen stärker, und dort, wo die Belichtung geringer war, die Schwärzungen geringer sind. Das sich ergebende Bild, mit seinen Grauzonen bzw. Schwärzungen ist proportional der Belichtungsintensität der Lichtquelle und damit den Ausleuchtungsunterschieden, die diese Lichtquelle in einer Bildfläche des Leuchtkastens hervorrufen würde. Die Korrekturmaske 7 bildet so einen exakten individuell angepaßten Filter, der eine völlig gleichmäßige Ausleuchtung der Bildfläche ergibt.

In Fällen, in denen Leuchkästen in Serie hergestellt werden, können die Korrekturmasken 7 von einem fototechnisch erzeugtem Duplikat einer nach obigem Verfahren erzeugten Urmaske gebildet sein. Eine solche Duplizierung ist auf dem Wege des Umkopierens unschwer und preisgünstig durchzuführen. Es ist jedoch auch denkbar, ausgehend von einer Urmaske im obigen Sinne Duplikate auf drucktechnischem Wege anzufertigen, z. B. im Siebdruckverfahren. In diesem Falle würde von der Urmaske ein Rasterfilm gezogen, nach dem dann eine transparente Folie zur Bildung einer Korrekturmaske 7 bedruckt wird. Hiervon abweichend ist es auch möglich, die rückwärtige Trägerscheibe 4 unmittelbar zu bedrucken.

Die vorstehend beschriebenen Ausgestaltungen der Korrekturmaske 7 schaffen nicht nur einen exakten, weil individuell abgestimmten Beleuchtungsausgleich, sondern sind auch einfach und preisgünstig herstellbar. Statt dessen ist es aber auch denkbar, anstelle einer Flachfolie einen gewölbten Maskenkörper vorzusehen, der sich um die Lichtquelle auf dessen dem Diapositiv 5 zugewandten Seite herumerstreckt. Die Korrekturmaske könnte dabei ein leistenförmiger, gewölbter Glaskörper sein, der eine Bedruckung aufweist. Auch denkbar ist es, den Glaskörper der Lichtquelle, z. B. den Zylinder der Leuchtstoffröhre 6, außenseitig zu bedrucken, derart, daß exakt die Wirkung des Ausgleichs der Ausleuchtung der Bildfläche erzeugt wird, wie er oben beschrieben wurde.

## Ansprüche

1.  Leuchtkasten für Diapositive oder vergleichbare Transparentvorlagen, mit zwei vorderseitigen transparenten Trägerscheiben, die zwischen sich das Diapositiv aufnehmen, sowie zumindest einer im Kastenbereich im Abstand hinter der inneren Trägerscheibe angeordneten Lichtquelle, z.B. einer oder mehreren Leuchtstoffröhre(n), dadurch gekennzeichnet, daß zwischen dem Diapositiv (5) und der Lichtquelle (6) eine Korrekturmaske (7) mit Bereichen unterschiedlicher Lichtdurchlässigkeit zum Ausgleich der Leuchtdichtenunterschiede in der Ebene des Diapositivs (5) vorgesehen ist.

2.  Leuchtkasten nach Anspruch 1, dadurch gekennzeichnet, daß die Korrekturmaske (7) von einer Flachfolie mit bereichsweise unterschiedlicher Lichtdurchlässigkeit gebildet ist.

3.  Leuchtkasten nach Anspruch 1 oder 2, dadurch gekennzeichnet, daß die Korrekturmaske (7) in einer Parallelebene zum Diapositiv (5) unmittelbar hinter diesem oder der inneren Trägerscheibe (4) angeordnet und festgelegt ist.

4.  Leuchtkasten nach einem der Ansprüche 1 bis 3, dadurch gekennzeichnet, daß die Korrekturmaske (7) von einer kurzzeitig in einem identisch ausgebildeten Leuchtkasten von dessen Lichtquelle (6) belichteten und anschließend entwickelten fotografischen Filmfolie gebildet ist.

5.  Leuchtkasten nach Anspruch 4, dadurch gekennzeichnet, daß als fotografische Filmfolie ein empfindlicher Halbtonfilm vorgesehen ist.

6.  Leuchtkasten nach Anspruch 4 oder 5, dadurch gekennzeichnet, daß die Korrekturmaske (7) von einem foto- oder drucktechnisch erzeugten Duplikat einer kurzzeitig in einem identischen Leuchtkasten belichteten und anschließend entwickelten fotografischen Filmfolie als Vorlage gebildet ist.

7. Leuchtkasten nach Anspruch 6, dadurch gekennzeichnet, daß ein die Korrekturmaske (7) bildender Duplikatdruck unmittelbar auf der inneren Trägerscheibe (4) angebracht ist.

8. Leuchtkasten nach Anspruch 7, dadurch gekennzeichnet, daß der Duplikatdruck als Siebdruck ausgeführt ist.

## Claims

1. A light box for slides or comparable transparencies comprising at the front two transparent carrier plates which receive the slide between them and also at least one light source, e.g. one or plurality of luminescent tubes disposed at a distance behind the inner carrier plate, characterised in that between the slide (5) and the light source (6) there is a correcting mask (7) with areas of differing light permeability to compensate for differences in light density in the plane of the slide (5).

2. A light box according to Claim 1, characterised in that the correcting mask (7) consists of a flat film the light permeability of which varies from one area to another.

3. A light box according to Claim 1 or 2, characterised in that the correcting mask (7) is disposed and fixed in a parallel plane with the slide (5) immediately behind this latter or the inner carrier plate (4).

4. A light box according to one of Claims 1 to 3, characterised in that the correcting mask (7) consists of a photographic film exposed briefly in an identically constructed light box by the light source (6) thereof and subsequently developed.

5. A light box according to Claim 4, characterised in that a sensitive half-tone film is provided as the photographic film.

6. A light box according to Claim 4 or 5, characterised in that the correcting mask (7) consists of a duplicate produced by photography or by printing techniques, of a photographic film original briefly exposed and subsequently developed in an identical light box.

7. A light box according to Claim 6, characterised in that a duplicate print forming the correcting mask (7) is provided directly on the inner carrier plate (4).

8. A light box according to Claim 7, characterised in that the duplicate print is a screen print.

## Revendications

1. Boîte à lumière pour diapositives ou supports transparents comparables, comportant deux lames de support transparentes antérieures qui reçoivent la diapositive entre elles ainsi qu'au moins une source lumineuse installée dans la boîte, à une certaine distance derrière la lame de support interne, par exemple un ou plusieurs tubes fluorescents, caractérisée en ce qu'entre la diapositive (5) et la source lumineuse (6) est prévu un masque de correction (7) présentant des zones de transparence différente pour égaliser les différences de densité lumineuse dans le plan de la diapositive (5).

2. Boîte à lumière suivant la revendication 1, caractérisée en ce que le masque de correction (7) est formé par une pellicule plane à transparence localement différente.

3. Boîte à lumière suivant la revendication 1 ou 2, caractérisée en ce que le masque de correction (7) est installé et fixé dans un plan parallèle à la diapositive (5) immédiatement derrière celle-ci ou derrière la lame de support interne (4).

4. Boîte à lumière suivant l'une quelconque des revendications 1 à 3, caractérisée en ce que le masque de correction (7) est formé par une pellicule photographique exposée brièvement, dans une boîte à lumière de configuration identique, à la source lumineuse (6) de celle-ci, puis développée.

5. Boîte à lumière suivant la revendication 4, caractérisée en ce qu'à titre de pellicule photographique est prévu un film à modelé continu sensible.

6. Boîte à lumière suivant la revendication 4 ou 5, caractérisée en ce que le masque de correction (7) est formé d'un contretype obtenu par impression ou par photographie, d'une pellicule photographique, servant de modèle, exposée brièvement dans une boîte à lumière identique, puis développée.

7. Boîte à lumière suivant la revendication 6, caractérisée en ce qu'un contretype imprimé formant le masque de correction (7) est appliqué directement sur la lame de support interne (4).

8. Boîte à lumière suivant la revendication 7, caractérisée en ce que le contretype imprimé est réalisé par sérigraphie.

Fig. 1

Fig. 2

Fig. 3

Fig. 4